# FASCICULE DE BREVET EUROPEEN

(11) **EP 2 594 082 B1**
(45) Date de publication et mention de la délivrance du brevet: **02.09.2015**
(21) Numéro de dépôt: 11741638.8
(22) Date de dépôt: 04.07.2011
(51) Int. Cl.: H04Q 3/00, H04L 12/28

(54) **CONTINUITÉ DE LA DISPONIBILITÉ D'UN SERVICE DE COMMUNICATION**
KONTINUIERLICHE VERFÜGBARKEIT EINES KOMMUNIKATIONSDIENSTES
CONTINUITY OF THE AVAILABILITY OF A COMMUNICATION SERVICE

(30) Priorité: 15.07.2010 FR 1055763
(43) Date de publication de la demande: 22.05.2013
(73) Titulaire: Softathome, 92000 Nanterre (FR)
(72) Inventeur: BADUEL, Guy, F-95180 Menucourt (FR); MAKOWSKI, Wojciech, F-78230 Le Pecq (FR)
(74) Mandataire: Pontet Allano & Associes
(86) Numéro de dépôt international: PCT/FR2011/051568
(87) Numéro de publication internationale: WO 2012/010764

(56) Documents cités:
- MAMEDE J ET AL: "A network approach for communal access services", CONSUMER ELECTRONICS, 2008. ISCE 2008. IEEE INTERNATIONAL SYMPOSIUM ON, IEEE, PISCATAWAY, NJ, USA, 14 avril 2008 (2008-04-14), pages 1-5, XP031283604, ISBN: 978-1-4244-2422-1
- JORGE MAMEDE ET AL: "Communal Network Architecture for Sharing High Bandwidth Services", COMMUNICATION NETWORKS AND SERVICES RESEARCH CONFERENCE, 2008. CNSR 2008. 6TH ANNUAL, IEEE, PISCATAWAY, NJ, USA, 5 mai 2008 (2008-05-05), pages 300-307, XP031252456, ISBN: 978-0-7695-3135-9
- SIDDIQUI M S ET AL: "A set-top box for end-to-end QoS management and home network gateway in IMS", IEEE TRANSACTIONS ON CONSUMER ELECTRONICS, IEEE SERVICE CENTER, NEW YORK, NY, US, vol. 52, no. 2, 1 mai 2009 (2009-05-01), pages 527-534, XP011270901, ISSN: 0098-3063

## Description

La présente invention se rapporte à un procédé permettant d'assurer la continuité de la disponibilité d'un service de communication entre une passerelle domestique locale et un réseau externe de communication de type réseau WAN. Elle se rapporte également à une passerelle domestique mettant en oeuvre un tel procédé.

Par services de communication on entend en particulier l'accès Internet, la téléphonie par IP et la télévision par IP. Mais de façon générale, les services de communication peuvent concerner, de façon non limitative, tous services disponibles sur le réseau externe de communication, des services Web tels que les moteurs de recherche, le partage de vidéos, portails communautaires ainsi que des services non-Web comme la messagerie instantanée ou de partage de fichiers « peer-to-peer »,...

Par réseau externe de communication, on entend en particulier un réseau WAN (« Wide Area Network » pour réseau étendu), mais généralement tout réseau externe qui devient accessible aux appareils de réseau domestique grâce à la connectivité externe proposée par la passerelle domestique. Cette connectivité externe est fournie par, mais de façon non limitative, des technologies telles que xDLS, FTTx, Ethernet, Docsis, 3G, etc. Ces réseaux externes comprennent, de façon non limitative, des réseaux de fournisseur de services Internet, l'Internet lui-même, des réseaux privés connectés à Internet...

Par appareil de réseau domestique on entend tout dispositif capable de communiquer avec des réseaux externes par l'intermédiaire d'une passerelle domestique quel que soit le moyen de connexion utilisé entre cet appareil et la passerelle domestique. Ce moyen de connexion comprend de façon non limitative, le réseau Ethernet, le réseau WiFi, la connexion Bluetooth, la connexion CAT-iq,... Par conséquent, le terme de « réseau domestique » désigne l'ensemble des réseaux et des technologies de connectivité utilisée pour connecter des appareils de réseau domestique à des réseaux externes par l'intermédiaire d'une passerelle domestique. Comme appareil de réseau domestique, on peut notamment citer les ordinateurs, téléphones portables, assistants numériques personnels, consoles de jeux, lecteurs de musique, tablettes, les dispositifs réseau de stockage, les décodeurs numériques, téléviseurs connectés,... Un example se trouve dans MAMEDE J ET AL: "A network approach for communal access services", CONSUMER ELECTRONICS, 2008. ISCE 2008. IEEE INTERNATIONAL SYMPOSIUM ON, IEEE, PISCATAWAY, NJ, USA, 14 avril 2008 (2008-04-14), pages 1-5, XP031283604,

La présente invention trouve une application particulièrement intéressante, mais non exclusivement, dans le service d'accès communautaire.

Le service d'accès au réseau Internet basé sur un réseau dit communautaire est connu depuis plusieurs années. Il est basé sur le principe que chaque membre d'une telle communauté autorise les autres membres de la communauté à utiliser son accès à Internet dans la situation où ils se trouveraient dans sa proximité. Techniquement cet accès est offert par l'intermédiaire d'une technologie de communication sans fil comme, par exemple, Wi-Fi ou WiMax. Ainsi la passerelle domestique (« home gateway ») d'accueil, c.-à-d. offrant le service d'accès communautaire, se rend visible et accessible dans sa zone de proximité (dont la portée géographique dépend de la technologie utilisée) par l'intermédiaire d'une technologie de communication sans fil. Un membre nomade de la communauté, dit visiteur, se trouvant dans la proximité d'une passerelle d'accueil peut se connecter à ladite passerelle par l'intermédiaire de cette technologie de communication sans fil. Etant connectée à Internet (par une technologie comme xDSL, fibre optique, câble coaxial etc.) la passerelle d'accueil permet ainsi au visiteur d'accéder à Internet. Cet accès communautaire est utilisé le plus souvent pour accéder aux différents services Internet, comme Web ou la messagerie électronique par exemple. Dans certaines implémentations des appareils téléphoniques basés sur une telle technologie de communication sans fil peuvent se connecter à une passerelle d'accueil puis de passer des appels téléphoniques.

Les réseaux communautaires existant sont destinés à l'utilisateur nomade (visiteur) ayant besoin d'accéder à Internet (et dans certains cas au service de téléphonie) quand il se trouve en dehors de son propre réseau d'accès domestique. Un tel utilisateur nomade doit être équipé d'un appareil permettant la connexion par la technologie sans fil. L'accès, quant à lui, est réalisé à la demande de l'utilisateur nomade et nécessite un passage réussi par une procédure d'authentification manuelle ; le plus souvent, l'utilisateur nomade doit fournir un identifiant et un mot de passe permettant son authentification.

L'objet de la présente invention correspond à un autre besoin. En effet, il correspond à une situation non-nomade, c.-à-d. quand l'utilisateur se trouve chez lui mais son accès au réseau WAN est coupé. La présente invention est notamment remarquable par le fait que l'activité inventive réside notamment dans la problématique identifiée par l'inventeur. En effet, avec les réseaux communautaires existants, l'utilisateur pourrait se connecter à une passerelle d'accueil voisine pour profiter de l'accès WAN que cette passerelle offre. Toutefois, les réseaux communautaires existant nécessitent que l'utilisateur se rende compte de cette indisponibilité pour effectuer manuellement la connexion à une passerelle d'accueil voisine. De plus, cette connexion est réalisée directement entre un appareil donné de l'utilisateur et la passerelle du réseau communautaire - cet appareil doit donc disposer des capacités technologiques permettant une telle connexion, comme Wi-Fi par exemple. Or, un tel fonctionnement est non seulement peu confortable mais il présente également plusieurs problèmes majeurs à l'utilisateur. En effet, l'utilisateur ne pourra recevoir aucun appel téléphonique entrant tant qu'il ne s'est pas rendu compte de l'indisponibilité de son accès WAN. De plus, si l'utilisateur ne dispose que des appareils téléphoniques classiques c.-à-d. connectés sur le port RXS de sa passerelle domestique, alors il ne dispose d'aucun moyen pour rétablir le service de téléphonie en passant par le réseau communautaire.

La présente invention a pour objet de remédier à ces inconvénients en proposant un nouveau procédé pour assurer la continuité de la disponibilité d'un service de communication entre une passerelle domestique locale et un réseau externe de communication de type réseau WAN offrant ledit service de communication. Selon l'invention, la passerelle domestique locale, qui est de préférence fixe, est configurée de sorte qu'elle :
- supervise de façon permanente ou périodique la disponibilité du service de communication,
- si ce service de communication n'est pas disponible, détecte de façon automatique une passerelle domestique voisine par communication sans fil, il peut s'agir d'une passerelle faisant partie d'une même communauté que la passerelle domestique locale ou non ;
- établit une connexion sans fil avec la passerelle domestique voisine,
- s'authentifie de façon automatique auprès d'un service d'authentification dans le réseau externe via la passerelle domestique voisine, et
- établit une liaison avec le service de communication via la passerelle domestique voisine.

Dans le procédé selon l'invention, la passerelle domestique locale agit de manière anticipée et automatique. Ainsi, le service de communication reste disponible et la passerelle peut recevoir toute requête émanant dudit service de communication. On évite ainsi le risque que des requêtes soient perdues du fait que la connexion entre la passerelle domestique locale et le réseau WAN est par exemple coupée. On n'attend pas une action spécifique de l'utilisateur pour entamer une recherche de passerelle domestique voisine.

De préférence, lorsque la liaison est établie entre la passerelle domestique locale et le service de communication, la passerelle domestique locale transmet un signal d'alerte vers un appareil de réseau domestique de façon à signaler l'établissement d'une liaison via la passerelle domestique voisine. On peut également imaginer que la passerelle domestique voisine affiche ou transmette un message à un appareil de son réseau domestique pour signaler qu'elle sert de relai pour ladite passerelle domestique locale.

Selon une caractéristique avantageuse de l'invention, peut comprendre :
- un service de téléphonie basé sur le protocole IP (VOIP) ;
- un service d'accès Internet ; ou
- un service de télévision IP (IPTV).

Lorsqu'il s'agit de la téléphonie IP, on peut utiliser le protocole SIP ou le protocole H323 pour la signalisation lors des échanges avec la passerelle domestique voisine et le réseau externe.

Par ailleurs, le transport de la voix peut être basé sur le protocole RTP.

Selon un mode de réalisation avantageux de l'invention, lorsque les deux passerelles domestiques n'appartiennent pas à une même communauté, mais pas uniquement, on prévoit que l'étape de connexion sans fil ne soit réalisée qu'en réponse à la détection de la composition d'un numéro d'urgence par l'intermédiaire de la passerelle domestique locale.

Selon un autre aspect de l'invention, il est proposé une passerelle domestique pour assurer la continuité de la disponibilité d'un service de communication offert par un réseau externe de communication de type réseau WAN, cette passerelle domestique comprenant au moins un processeur numérique et des espaces mémoires stockant une application logicielle qui, lors de son exécution par le processeur numérique, maintient la disponibilité dudit service de communication en mettant en oeuvre un procédé tel que décrit ci-dessus.

D'autres avantages et caractéristiques de l'invention apparaîtront à l'examen de la description détaillée d'un mode de mise en oeuvre nullement limitatif, et des dessins annexés, sur lesquels :
La figure 1 est une vue schématique générale d'un système mettant en oeuvre le procédé selon l'invention ;
La figure 2 est un schéma illustrant la chronologie entre les étapes du procédé selon l'invention et l'établissement d'une communication par un utilisateur ; et
La figure 3 est un schéma illustrant des étapes du procédé selon l'invention pour un appel en cas d'urgence.

Bien que l'invention n'y soit pas limitée, on va décrire le procédé selon l'invention dans le cadre d'un service de téléphonie sur IP pour des passerelles domestiques faisant parties d'une même communauté.

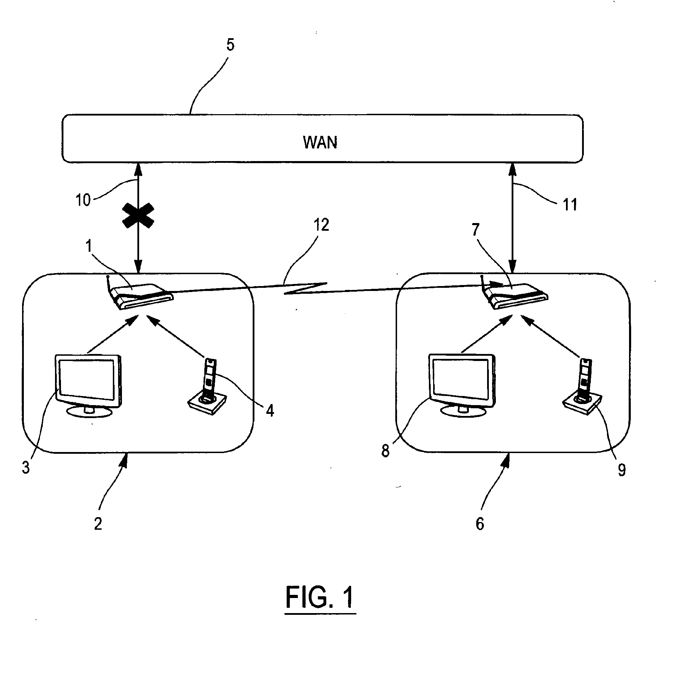

En référence à la figure 1, on distingue une passerelle domestique locale 1, disposée de façon fixe dans un domicile 2 et adaptée pour permettre à des appareils de réseau domestique 3 et 4 d'accéder à des services offerts par le réseau étendu WAN 5 via l'accès 10. Les appareils de réseau domestique comprennent un poste de télévision 3 pour de la télévision sur IP et un téléphone 4 pour de la téléphonie sur IP. Le domicile 6 est suffisamment proche du domicile 2 pour être dans la portée des moyens de communication sans fil de la passerelle domestique locale 1. Dans le domicile 6 se trouve une passerelle voisine 7 capable de communiquer de façon sans fil avec la passerelle domestique locale 1 et adaptée pour permettre à des appareils de son réseau domestique 8 et 9 d'accéder à des services offerts par le réseau étendu WAN 5 via l'accès 11.

Selon la présenté invention, la passerelle domestique locale 1 supervise l'état de son accès 10 au réseau WAN 5. Si cette connexion n'est plus opérationnelle et s'il n'est pas possible de la rétablir, alors la passerelle domestique locale 1 utilise ses moyens de communication sans fil (comme Wi-Fi ou WiMax par exemple) pour détecter, dans sa proximité, la présence d'autres passerelles domestiques voisines appartenant au même réseau communautaire. Si la passerelle domestique voisine 7 est détectée, alors une connexion sans fil 12 est établie entre les deux passerelles domestiques 1 et 7. Une procédure d'authentification est exécutée automatiquement entre la passerelle domestique 1 et un service d'authentification dans le réseau WAN 5, en passant par la passerelle domestique voisine 7. Quand la connexion est authentifiée, le service de téléphonie peut être provisionné et rendu disponible. Ainsi l'appareil téléphonique 4 peut recevoir une communication venant du réseau WAN 5 par l'intermédiaire de l'accès 11, de la passerelle domestique voisine 7, de la connexion sans fil 12 puis de la passerelle domestique locale 1.

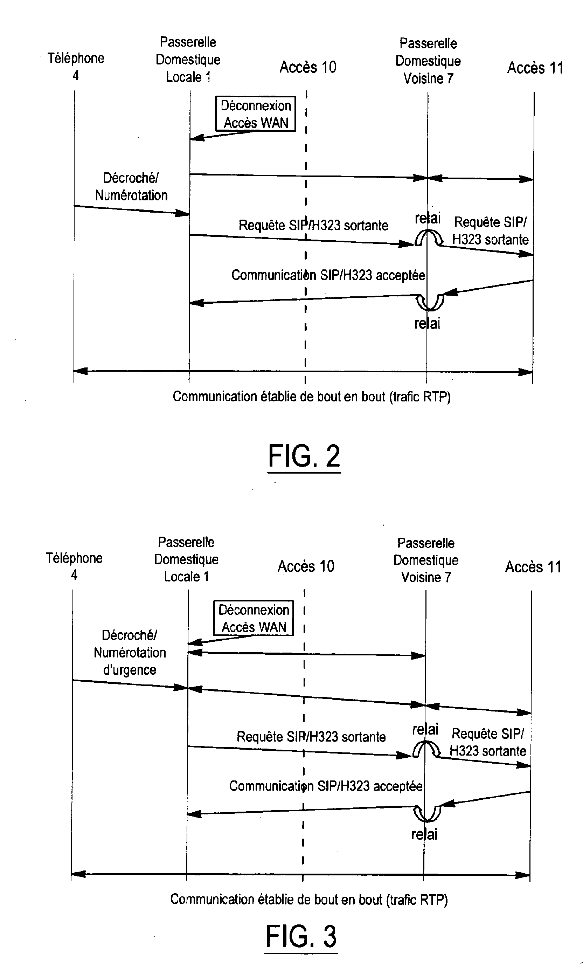

Sur la figure 2, dès la déconnexion de l'accès 10 entre la passerelle domestique locale 1 et le réseau WAN 5, la passerelle domestique locale 1 établit une connexion avec la passerelle domestique voisine 7 et s'authentifie auprès du réseau WAN via l'accès 11. Lorsqu'un utilisateur décroche le téléphone 4 et compose un numéro, le service téléphonie est déjà disponible et la communication de bout en bout peut être établie immédiatement en utilisant la passerelle domestique voisine 7 comme relai.

Sur la figure 3, dès la déconnexion de l'accès 10 entre la passerelle domestique locale 1 et le réseau WAN 5, la passerelle domestique locale 1 établit une connexion avec la passerelle domestique voisine 7. L'authentification auprès du réseau WAN via l'accès 11 n'est effectuée qu'à partir du moment où un utilisateur décroche le téléphone 4 et compose un numéro d'urgence. Le service téléphonie est alors complètement disponible et la communication de bout en bout peut être établie immédiatement en utilisant la passerelle domestique voisine 7 comme relai. A la fin de l'appel d'urgence, la connexion établie entre les deux passerelles domestiques est terminée.

Le procédé décrit permet donc la continuité du service de téléphonie basé sur le protocole IP (VoIP) dans la situation où l'accès au réseau WAN n'est plus disponible dans le réseau domestique local mais reste opérationnel dans un deuxième réseau domestique voisin et où les deux réseaux domestiques appartiennent à une communauté permettant le partage de l'accès aux services rendus par le réseau WAN.

## Revendications

1. Procédé pour assurer la continuité de la disponibilité d'un service de communication entre une passerelle domestique locale et un réseau externe de communication de type réseau WAN offrant ledit service de communication, **caractérisé par le fait que** la passerelle domestique locale :
- supervise la disponibilité du service de communication,
- si ce service de communication n'est pas disponible, détecte de façon automatique une passerelle domestique voisine par communication sans fil,
- établit une connexion sans fil avec la passerelle domestique voisine,
- s'authentifie de façon automatique auprès d'un service d'authentification dans le réseau externe via la passerelle domestique voisine,
- établit une liaison avec le service de communication via la passerelle domestique voisine.

2. Procédé selon la revendication 1, **caractérisé en ce que** le service de communication est un service de téléphonie basé sur le protocole IP (VOIP).

3. Procédé selon la revendication 2, **caractérisé en ce qu'**on utilise le protocole SIP pour la signalisation lors des échanges avec la passerelle domestique voisine et le réseau externe.

4. Procédé selon la revendication 2, **caractérisé en ce qu'**on utilise le protocole H323 pour la signalisation lors des échanges avec la passerelle domestique voisine et le réseau externe.

5. Procédé selon l'une quelconque des revendications 2 à 4, **caractérisé en ce que** le transport de la voix est basé sur le protocole RTP.

6. Procédé selon l'une quelconque des revendications 2 à 5, **caractérisé en ce que** l'étape de connexion sans fil n'est réalisée qu'en réponse à la détection de la composition d'un numéro d'urgence depuis la passerelle domestique locale.

7. Procédé selon l'une quelconque des revendications précédentes, **caractérisé en ce que** le service de communication est un service d'accès Internet.

8. Procédé selon l'une quelconque des revendications précédentes, **caractérisé en ce que** le service de communication est un service de télévision IP (IPTV).

9. Procédé selon l'une quelconque des revendications précédentes, **caractérisé en ce que** la passerelle domestique locale transmet un signal d'alerte vers un appareil de réseau domestique de façon à signaler l'établissement d'une liaison via la passerelle domestique voisine.

10. Passerelle domestique pour assurer la continuité de la disponibilité d'un service de communication offert par un réseau externe de communication de type réseau WAN, cette passerelle domestique comprenant au moins un processeur numérique et des espaces mémoires stockant une application logicielle qui, lors de son exécution par le processeur numérique, maintient la disponibilité dudit service de communication en mettant en oeuvre un procédé selon l'une quelconque des revendications précédentes.

## Patentansprüche

1. Verfahren zur Sicherstellung der Kontinuität der Verfügbarkeit eines Kommunikationsdienstes zwischen einem lokalen Heim-Gateway und einem externen, den genannten Kommunikationsdienst anbietenden Kommunikationsnetz vom Typ WAN, **dadurch gekennzeichnet, dass** das lokale Heim-Gateway:
- die Verfügbarkeit des Kommunikationsdienstes überwacht,
- bei Nichtverfügbarkeit dieses Kommunikationsdienstes ein benachbartes Heim-Gateway über drahtlose Kommunikation automatisch erkennt,
- eine drahtlose Verbindung mit dem benachbarten Heim-Gateway herstellt,
- sich automatisch bei einem Authentifizierungsdienst im externen Netz über das benachbarte Heim-Gateway authentifiziert,
- eine Verbindung mit dem Kommunikationsdienst über das benachbarte Heim-Gateway herstellt.

2. Verfahren nach Anspruch 1, **dadurch gekennzeichnet, dass** es sich bei dem Kommunikationsdienst um einen auf dem IP Protokoll basierenden Telefondienst (VOIP) handelt.

3. Verfahren nach Anspruch 2, **dadurch gekennzeichnet, dass** das SIP-Signalisierungsprotokoll bei dem Austausch zwischen dem benachbarten Heim-Gateway und dem externen Netz verwendet wird.

4. Verfahren nach Anspruch 2, **dadurch gekennzeichnet, dass** das H323-Signalisierungsprotokoll bei dem Austausch zwischen dem benachbarten Heim-Gateway und dem externen Netz verwendet wird.

5. Verfahren nach einem der Ansprüche 2-4, **dadurch gekennzeichnet, dass** die Übertragung der Sprache auf dem RTP-Protokoll basiert.

6. Verfahren nach einem der Ansprüche 2-5, **dadurch gekennzeichnet, dass** der drahtlose Verbindungsaufbau nur als Antwort auf die Erkennung der von dem lokalen Heim-Gateway ausgehenden Wahl einer Notrufnummer ausgeführt wird.

7. Verfahren nach einem der vorhergehenden Ansprüche, **dadurch gekennzeichnet, dass** es sich bei dem Kommunikationsdienst um einen Internet Zugangsdienst handelt.

8. Verfahren nach einem der vorhergehenden Ansprüche, **dadurch gekennzeichnet, dass** es sich bei dem Kommunikationsdienst um einen IP-Fernsehdienst (IPTV) handelt.

9. Verfahren nach einem der vorhergehenden Ansprüche, **dadurch gekennzeichnet, dass** das lokale Heim-Gateway ein Alarmsignal zu einem Heimnetz-Gerät überträgt, um den Aufbau einer Verbindung über das benachbarte Heim-Gateway zu signalisieren.

10. Heim-Gateway zur Sicherstellung der Kontinuität der Verfügbarkeit eines Kommunikationsdienstes, das von einem externen Kommunikationsnetz vom Typ WAN angeboten wird, wobei dieses Heim-Gateway mindestens einen digitalen Prozessor sowie Speicherplatz für eine Softwareanwendung umfasst, welche während deren Ausführung durch den digitalen Prozessor die Verfügbarkeit des genannten Kommunikationsdienstes dadurch aufrecht erhält, dass ein Verfahren nach einem der vorhergehenden Ansprüche umgesetzt wird.

## Claims

1. Method for ensuring the continuity of the availability of a communication service between a local domestic gateway and an external communication network of WAN network type offering said communication service, **characterized by** the fact that the local domestic gateway:
- supervises the availability of the communication service,
- if this communication service is not available, automatically detects a neighbouring domestic gateway by wireless communication,
- establishes a wireless connection with the neighbouring domestic gateway,
- automatically authenticates itself to an authentication service in the external network via the neighbouring domestic gateway,
- establishes a link with the communication service via the neighbouring domestic gateway.

2. Method according to claim 1, **characterized in that** the communication service is a telephony service based on the IP protocol (VOIP).

3. Method according to claim 2, **characterized in that** the SIP protocol is used for signalling during the exchanges with the neighbouring domestic gateway and the external network.

4. Method according to claim 2, **characterized in that** the H323 protocol is used for signalling during the exchanges with the neighbouring domestic gateway and the external network.

5. Method according to any one of claims 2 to 4, **characterized in that** the voice transport is based on the RTP protocol.

6. Method according to any one of claims 2 to 5, **characterized in that** the wireless connection step is only carried out in response to the detection of the dialling of an emergency number from the local domestic gateway.

7. Method according to any one of the preceding claims, **characterized in that** the communication service is an Internet access service.

8. Method according to any one of the preceding claims, **characterized in that** the communication service is a television over IP service (IPTV).

9. Method according to any one of the preceding claims, **characterized in that** the local domestic gateway transmits an alert signal to a domestic network device so as to signal the establishment of a link via the neighbouring domestic gateway.

10. Domestic gateway for ensuring the continuity of the availability of a communication service offered by an external communication network of the WAN network type, this domestic gateway comprising at least one digital processor and memory spaces storing a software application which, during its execution by the digital processor, maintains the availability of said communication service by implementing a method according to any one of the preceding claims.
